# EUROPEAN PATENT SPECIFICATION

(11) **EP 2 790 133 B1**
(45) Date of publication and mention of the grant of the patent: **20.02.2019**
(21) Application number: 13163309.1
(22) Date of filing: 11.04.2013
(51) Int. Cl.: G06K 19/08, B41M 3/14, B42D 15/00, G07D 7/04

(54) **Security feature and object with security feature**
Sicherheitsmerkmal und Objekt mit Sicherheitsmerkmal
Caractéristique de sécurité et objet avec caractéristique de sécurité

(43) Date of publication of application: 15.10.2014
(73) Proprietor: European Central Bank, 60311 Frankfurt am Main (DE)
(72) Inventor: Schulte-Wieking, Kay, 69126 Heidelberg (DE); Noehte, Steffen, 69126 Heidelberg (DE); Borgsmüller, Stefan, 69126 Heidelberg (DE)
(74) Representative: Prinz & Partner mbB

(56) References cited:
- WO-A1-02/095674
- DE-A1- 10 100 063
- DE-A1- 10 304 805
- US-A- 5 464 974
- US-A1- 2003 115 470
- US-A1- 2006 279 767
- US-A1- 2013 043 311

## Description

### FIELD OF THE INVENTION

The invention relates to a security feature and an object comprising the security feature.

### BACKGROUND

A large variety of security features for all kinds of valuable or security objects is know in the art. Most security features make use of specific optical effects of small structures or physical/optical effects of rare substances.

From US 2006/0279767, against which claim 1 is delimited, the so called "Eurion constellation" commonly used as a safety feature for bank notes is known. This feature consists of additional marks in the form of small circles in a specific geometric arrangement. These circles have a similar appearance as the rest of the content of the document.

WO 2009/150622 A2 discloses visible markings formed by small elements having defined different geometric shapes and forming encrypted information by a specific arrangement and varying shapes of small elements seems anticipated.

US 7 353 994 B2 describes randomly distributed particles, i.e. the images derived from the particles are random.

WO 2011/098803 and US 2013 0043311 describe apertures which are not hidden in the document.

DE 10 304 805 A1 discloses a security marking comprising a random pattern that applied to a product or label. A finger print in the form of a data set is extracted from the random input pattern. Finger print contains the individual characteristics of the pattern and is individually stored for each security marking. The finger print is extracted during authentication and is checked to see if it matches the stored finger print. The security marking can generally be used to protect against forgery e.g. for money, documents, water marks, vehicle number plates etc.

US 2003 0115470 A1 discloses apparatus, methods, and articles of manufacture having a check validation scheme wherein a payor's signature is digitized, encrypted and embedded on the front of the check using glyphs. When the payor seeks to convert a blank check into a negotiable instrument, the user fills out the check and signs it. When the check is presented to a bank for payment, a teller using a decoding device, decodes and decrypts the digitized signature such that a human-readable image of the digitized signature can be seen on a screen for comparison with the payor's scripted signature. If the two signatures are identical, the check is honored

US 2013 0043311 A1 discloses a security element for a document of value. The security element includes an array of apertures through at least a portion of the document of value, the arrangement of apertures relative to one another forming an observable data item. The array of apertures includes apertures of at least two different shapes or orientations, the occurrence of the different shapes or orientations within the array representing an encoded data item.

WO 02/095674 discloses an RFID transponder in form of a chip element with an antenna in the form of a bar code on a paper substrate. The chip divides the antenna in two parts.

US 5,464,974 discloses a machine readable binary code which is dynamically variable in size, format and density of information. The binary code is formed as a matrix having a perimeter and data contained therein. The perimeter is provided with density indicia for indicating the density of data contained within the matrix. The perimeter is also provided with size indicia for indicating the size of the matrix. By utilizing the density indicia and size indicia, a scanning device is able to calculate the size and information density of the binary code.

WO 02/095674 deals with an RFID transponder chip element with an antenna in the form of a bar code.

### SUMMARY

It is an object of the invention to provide a security feature that is covert regardless of whether or not it is visible to the naked eye. It is also an object of the invention to provide an object comprising the security feature.

The object is solved by the subject matter of claim 1.

The characteristic of the object (or element of the object) can advantageously be due to a manufacturing process of the object. The inherent characteristic can be a side-effect or unavoidable consequence of the manufacturing process. The inherent characteristic can also be a desired effect or desired physical appearance of the object. However, the inherent characteristic is advantageously not intentionally created for hiding the security feature. This aspect of the invention generally provides that the security feature is not immediately visible when the object is inspected by the naked eye (or even by use of detection or inspection instruments). The security feature according to aspects of the invention can thereby blend into its environment.

According to an aspect of the invention, marks may be added to object. The feature can then be hidden to the naked eye (covert) due to various different reasons. The security feature can advantageously be adapted to the inherent characteristic of the object in terms of one or more of the following: size, shape, distribution, number and/or color etc. More specifically, the color, size, shape, distribution and/or number of added (additional) marks (dots, holes, particles) may be adapted to the characteristic of the object (visual appearance). The added marks may be very small (for example having a diameter less than 20 µm). The additional marks may have the same or similar color as the object (at least in the location of the surface of the object where the marks are added). The additional marks may be randomly distributed. The additional marks may have only a small number per predefined area of the surface of the object. The added or additional marks may also be luminescent under UV (ultraviolet) light or IR (infrared) light. Under normal ambient conditions (normal daylight) the additional marks may be substantially invisible to the naked eye. The added marks are advantageously not perceivable or distinguishable by the naked eye under ambient light. These aspects further support the covertness of the security feature.

The process of configuring any predetermined data such that the physical appearance of the security feature is similar to a specific physical inherent characteristic of the object forms part of a channel coding. In other words, the invention also provides a security feature comprising additional marks which are arranged according to the channel coding in accordance with the aspects of the invention described here below.

In an embodiment of the invention, the object may comprise original marks as a characteristic of the object. The original marks can be a consequence of the manufacturing process of the object. The original marks can be randomly distributed. The security feature can then be configured to have a similar appearance as provided by the original marks on the object. This means that the pre-existing characteristic of the object can be imitated without substantially changing the original physical appearance of the object. The original marks may be defects, impurities, particles, holes, fibers, pigments, etc. The security feature may then comprise additional marks having a similar appearance as the originally existing marks. The additional marks can be similar to the original marks in terms of one or more of the following characteristics: size, shape, number, distribution, color etc. Each of these aspects of the invention further improves the covertness of the security feature.

The pre-existing characteristic or original marks of the object can also be substantially invisible to the naked eye. This means that also the original marks may not be obvious when inspected by the naked eye without using a magnifying glass, a microscope or other means of inspection or special light as UV or IR light. The additional marks may then have the same appearance and also be substantially invisible to the naked eye.

According to an aspect of the invention, one or more of the following characteristics may be used to represent the pre-determined machine readable information: the absolute or relative location of the additional marks, the size the shape, and/or the color of the individual additional marks.

According to a further aspect of the invention, the additional marks can be arranged in groups. The information or data may then be represented by a specific arrangement within a group of additional marks. A group of additional marks is also referred to as a symbol. A symbol may also only comprise one additional mark. This aspect has various advantages. The group or symbol may be easily identified. A group or symbol can be based on redundant information. The more redundant the information of a symbol or group of additional marks is, the better the error rate during read out of the information.

In an embodiment of the invention, the relative and/or absolute location of the marks within a specific area, region or portion of the object may represent the information (data). This also simplifies the detection of the marks and can be used to increase redundancy of the information. All detectable parameters and properties of the marks, be it individual, be it with respect to each other or with respect to the object can advantageously be used to represent information (data).

Each of the groups may then comprise a predetermined number of marks. The number of marks per group may for example be n. In advantageous embodiments n may be equal to 1, 2, 3, 4, 5, 6 or more.

According to an aspect of the invention, each group of marks may represent a multi-bit word of data (predetermined data) that is then represented by (stored in) the security feature. This simplifies the channel coding process in which the marks, group of marks or symbols are assigned to the data (predetermined information).

According to an aspect of the invention, the number of bits of the multi-bit word can be j. In advantageous embodiments j may be equal to 2, 3, 4, 5, 6, 7, 8, 9, 10 or more.

The number of marks per group may be different from the number of bits of the multi-bit word that is represented by the group of marks. In other words, a mark does not necessarily represent a single bit.

According to an aspect of the invention, two or more different symbols may be used for the same data (multi-bit word). This is advantageous as the redundancy within the security feature can be further increased while the appearance may still be random, if one of the multiple possible symbols is randomly selected.

According to an aspect of the invention, the predetermined information or data that is represented by the security feature can be encrypted raw data. Any pre-determined information/data (typically digital data) may then be encrypted before it is channel coded. This increases the security of the feature.

The pre-determined data/information can be encrypted using the Advanced Encryption Standard (AES). This is a symmetric key-algorithm in which only the owner of the key can decode the stored information. The AES algorithm generates a hash value which is stored in the data field. Reading out the hash value is not sufficient for the reconstruction of the stored information. In addition, the key is needed to decrypt the hash value and to obtain the original information.

Furthermore, the pre-determined information/data that is represented by security feature may be processed according to an error correction algorithm in order to make it possible to detect and/or correct detection/read-out errors. An advantageous algorithm is the Reed-Salomon algorithm.

According to an aspect of the invention, the encrypted raw data can be an encrypted serial number of the object (for example the serial number of a banknote).

It is also possible to use the security feature according to aspects of the invention hierarchically. This means that a security feature may have different levels so that a first level is detectable by rather simple detectors. Some marks provided within the security feature may then not be detectable by the simple detectors but only by more complex detectors. Accordingly, it is possible to incorporate different levels of security within a single security feature.

The object to which the security feature is applied may be a valuable object, a security object, a consumer product, a security document, a valuable document, a certificate (for example of birth, residence, marital status, name etc.), a certified copy of a document, a card, as for example a smart card, an access card, a credit card, a bonus card, an identity card, a passport, etc.

In an advantageous embodiment, the object may be a valuable document, as for example a banknote.

The security feature may then be incorporated, for example into a metalized layer or foil (for example a foil with a thin metal layer) of an element of an object, as for example a valuable document or a banknote. The metal may be aluminum or copper. In one embodiment the element of the object can be a metalized stripe. In another embodiment of the invention, the element of the object carrying the security feature can be a patch. The element carrying the security feature may have a thin layer of metal or lacquer or color to which the security feature is applied.

The security feature according to an embodiment of the invention may comprise dots. One dot may then be one additional mark. The additional marks, i.e. the dots may be printed. The dots may be adapted in number and/or size and or distribution and/or color to the surface of an object. The object may be a sheet of paper or plastic etc. For example, if the surface of the object is white, the additional marks (dots) may also be substantially white or light yellow. The maximum diameter of the dots may be smaller than 20 µm. The additional marks may be printed with luminescent (fluorescent etc.) color, as for example UV or IR luminescent color.

In another embodiment, the security feature may be a laser written structure. The marks of the security feature may be local, micrometer sized demetalizations. This is advantageous as the kind of metalized stripes or patches used on banknotes (and other documents) usually shows some defects in the form of little holes which seem randomly distributed over the stripe. These holes are due to the manufacturing process. The security feature may be located in a part of the foil stripe or it may be spread over the whole foil stripe by adding additional marks in form of holes. These holes can be generated by a laser and then look like all other demetalized dots which are due to the manufacturing process.

The security feature may be read-out with a dedicated sensor or detection apparatus. The detection may be based on a pattern recognition. A picture may be taken of the area where the security feature is located. The picture may then be processed. The possible locations of additional marks are known, so that the pattern recognition algorithm can search for the specific additional marks. If the marks are detected, the authenticity of the object can be confirmed. Due to redundancy, the authenticity may also be confirmed if only a few and not all additional marks are detected.

With respect to the above described embodiment using an element or object comprising demetalized dots, the security feature may be detected and read out in transmission using a microscopic setup. A light source can be located behind the valuable document (backside) and the microscope can be located on the opposite side of the valuable document (front side). If the additional marks of the security feature are a very little bit larger (in maximum diameter or cross-sectional area) than the original marks/dots, the demetalized dots may appear brighter than the background. In other words, the security feature itself comprises of a number of statistically appearing laser written dots. The number of dots per area of the stripe can then be very low. In an embodiment, the number of dots may be between 100 and 200. This improves the covertness of the feature.

The robustness of the coding allows very stable read-out of the data/information stored in the security feature even at high transport speeds of the valuable document, in particular of banknotes. An image processing algorithm can be used to decode the data after an image is taken. The same basic structure of the security element may be used on different valuable documents.

Within the context of this specification the following parameters apply::
Number of user bits: x (= k*j)
Number of Symbols (user data) k
Number of bits of serial number of a banknote: y
Number of bits of additional (user) information: z
Number of "marks" per symbol: n
Number of bits per symbol/ multi-bit-word: j
Number of "existing marks" (original marks): v
Number of "added marks" (additional marks): w

For example, a Reed-Solomon error code RS(m,k) transforms k symbols of data into j bit by adding 2*t parity symbols of j bits. The result is m symbols of j bit. In the decoding step t=(m-k)/2 incorrect symbols can be detected and corrected.

Generally, the number of bit to be stored in the feature depends on the used error correction algorithm and the number of errors which are to be detected and/or corrected.

According to an embodiment of the invention, individual user data may be incorporated into the banknote. If for example, the user storage capacity of the security feature is x bit (*k* multi-bit-words of *j* Bit, i.e. *x*=*k*j*), it is possible to incorporate for example a serial number that can be represented by y bit, while y is equal to or lower than x. The data may be a serial number of the valuable document. In another embodiment, only a part of the user data may be used (for example for a serial number) and the remaining z=x-y bits may be used for other information.

According to an aspect of the invention, the individual user data to be stored in the security feature can be a serial number, a batch number, a denomination, a production country, a production year or other information.

In an embodiment of the invention, this additional information/data (z bit) can be statistical data or other features of the valuable document. This may then lead to the possibility of correlating security features or data of the valuable document. Using correlation can improve the level of security against copying and counterfeiting.

An advantage of the security feature according to aspects of the invention is that the feature is not necessarily affected by a specific design of the object. Furthermore, the security feature according to aspects of the invention does not affect the design of the object due to its covert character.

The security feature according to aspects of the invention may be written using a laser lithographic system allowing direct demetalization of thin metal layers. The demetalization may have very small dot sizes (only a few micrometers, as for example 1, 2, 3, 4 up to 10, 16 or 20 µm) and a very high relative positional accuracy of the additional marks of for example 0,1, 0,2 up to 0,5 µm.

The security feature according to aspects of the invention may then comprise only a few micrometer sized dots which appear randomly distributed. If these dots are sufficiently small, they cannot be observed with the naked eye, neither in reflection nor in transmission.

In an embodiment of the invention, even with a magnifying glass or microscope, the dots may not be detected in reflection mode by the naked eye. Only in transmission mode and by use of a microscope, the dots may be identified.

According to an aspect of the invention, the positions of the marks within each symbol are randomly distributed (pseudo-randomly). The marks (or dots) do then appear like a random pattern similar to defects in metalized foil stripes of valuable documents such as banknotes. In particular, metalized foil stripes of valuable documents or banknotes usually have this kind of defects.

Due to the random appearance of the additional marks it is hardly possible to notice any regularity by comparing the mark patterns of different objects.

According to an aspect of the invention, individual statistical information of the object may be stored in a secure data carrier which is included in the object.

According to an aspect of the invention, the pre-determined data/information to be stored in the security feature may be correlated with other information. This information may, for example relate to production variations of the object. These production variations may comprise properties like optical density, alignment, geometrical distortions, edge sharpness, holes etc.

In an embodiment of the invention, the data/information in the security feature may be correlated with the printed serial number of the object.

According to an aspect of the invention, the data/information in the security feature may be correlated with another security feature of the object. This other security feature may be a UV (ultraviolet), magnetic or infrared (IR) print.

According to an aspect of the invention, the data/information in the security feature may be correlated with production variations of the whole object or only of the component of the object carrying the security feature. These production variations may relate to UV fibers, paper roughness, alignment, batch properties etc.

According to an aspect of the invention, each symbol can be located within (or delimited by) a specific area, region or portion of the object. Using this kind of defined area, region or portion can be advantageous in order to identify the different symbols. The predefined area of a symbol is referred to as a block.

According to an aspect of the invention, the several blocks (areas, regions or portions containing the symbols) may be composed in order to represent data fields.

According to another aspect of the invention, multiple data fields containing the same information may be provided on the object. This aspect of the invention improves the robustness of the security features, if one or more of the data fields is partially or entirely destroyed.

According to an aspect of the invention, two symbols of one set of symbols never share any marks. This means that the marks of two symbols are never at the same location. The marks of different symbols may also vary in shape and size.

According to an aspect of the invention, the number of marks per symbol can be increased. This reduces the error rate as a symbol may still be correctly detected and read even if not all marks are readable. The more marks are used per symbol, the more robust is the channel coding.

According to an aspect of the invention, the positions of the marks within the symbols are randomly chosen.

According to an aspect of the invention, each security feature can be individually calculated. This provides a unique individual structure for each security feature and different objects can have a different security feature.

According to an aspect of the invention, an additional marking or structure may be provided on the object carrying the security feature. The additional marking may serve to align the object with a detector in order to read-out the security feature.

In an embodiment of the invention, the object may comprise a first additional marking for rough alignment and a second additional marking for fine alignment. At least the second marking for fine alignment can be produced by the same manufacturing steps and/or devices which are used for the additional marks of the security feature.

If, in an embodiment, the security feature comprises additional marks made by a laser, the laser may also be used for the second marking. If, in another embodiment, the security feature comprises additional marks made by printing, the same printing device may also be used for the second marking. This provides that the same precision that is used for the additional marks of the feature is automatically applied to the second marking that serves to properly align the object for the detecting the additional marks of the security feature.

Furthermore, the first marking can be a different type of marking than the second marking. It can, for example be visible to the naked eye while the second marking is not visible. The structure and visibility of the first marking can be much greater than the visibility and structure of the second marking.

According to still another aspect of the invention the security feature can be organized hierarchically. This means that a security feature may have different levels so that a first level is detectable by a first type of detectors and the second level is detected by a second type of detectors. The first type of detectors may be rather simple detectors. Some marks provided within the security feature may then not be detectable by the simple detectors but only by more complex detectors (second type). Accordingly, it is possible to incorporate different levels of security within a single security feature.

The different hierarchical levels within the security feature can be provided by using different shapes and/or sizes and/or colors and/or numbers and/or distributions and/or patterns for the marks of different levels of the security feature. For example, a smaller size (maximum diameter or area) of the additional marks may render it impossible to detect those marks with a rather simple detector.

The invention also provides a valuable object or security object comprising a security feature in accordance with the invention.

Advantageously, a banknote is provided comprising the security feature in accordance with aspects of the invention.

The invention also provides a method of manufacturing a security feature in accordance with the aspect of the invention. An object or a component and/or element and/or area and/or region and/or portion of the object may then be analyzed for a specific characteristic, as for example a physical appearance of the object and/or the component and/or element and/or region and/or area, and/or portion of the object.

The object and/or the component and/or element and/or region and/or area and/or portion of the object is manufactured. A security element can then be applied to the object and/or the component and/or element and/or region and/or area and/or portion of the object, either after manufacturing the object, or while manufacturing.

The security feature can be adapted by shape and/or size and/or color and/or distribution and/or appearance to the characteristic of the object and/or the component and/or element and/or region and/or area and/or portion of the object.

If the characteristic is a certain pattern or assembly of marks, it can be advantageous to create additional marks for the security feature having about the same size, shape and/or color (individually). However, the additional marks are advantageously less in number then the already existing marks (original marks).

A channel coding may be used in order to provide a representation of predefined information or data that is machine readable and the physical appearance of which is similar to a characteristic of an object (or an element of an object) to which the security feature is applied.

The characteristic of the object (or element of the object) can advantageously be due to a manufacturing process of the object. The characteristic can be a side-effect or unavoidable consequence of the manufacturing process. The characteristic can also be a desired effect or desired physical appearance of the object. This aspect of the invention generally provides that the security feature is not immediately visible when the object is inspected by the naked eye under normal ambient light (for example daylight).

### BRIEF DESCRIPTION OF DRAWINGS

Further advantages and characteristics of the invention will ensue from the following description of the preferred embodiments of the invention with reference to the accompanying drawings, wherein
FIG.1 shows a simplified schematic representation of an object having specific production characteristics,
FIG. 2 shows the object of FIG. 1 carrying the security feature according to an embodiment of the invention,
FIG. 3 shows a simplified block diagram of an embodiment according to aspects of the invention,
FIG. 4 shows a simplified block diagram of an embodiment according to aspects of the invention,
FIG. 5 shows a simplified block diagram of an embodiment according to aspects of the invention,
FIG. 6 shows a diagram illustrating aspects of the invention,
FIG. 7 shows a flow chart illustrating the procedure of creating a security feature in accordance with aspects of the invention,
FIG. 8 is a simplified schematic of an embodiment of the invention,
FIG. 9 is a simplified schematic of a detection apparatus, and
FIG. 10 is a simplified schematic of an embodiment of the invention.

### DETAILED DESCRIPTION OF PREFERRED EMBODIMENTS

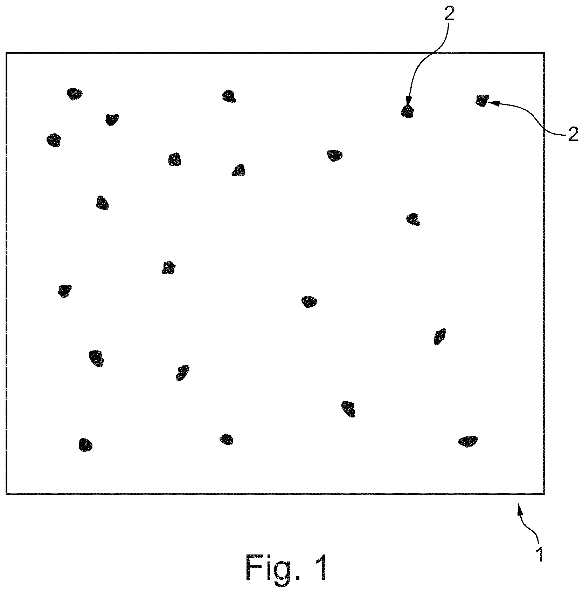

FIG. 1 shows a simplified schematic representation of an object 1 having an inherent characteristic. In the present embodiment, this characteristic is a plurality of marks 2 which are created during manufacturing of the object 1. However, in general, these marks may be any kind of intended or non-intended characteristic. In this embodiment, the original marks 2 may, for example be anyone or several of the following: defects and/or impurities and/or particles and/or holes and/or fibers and/or pigments. These marks or defects can be randomly distributed.

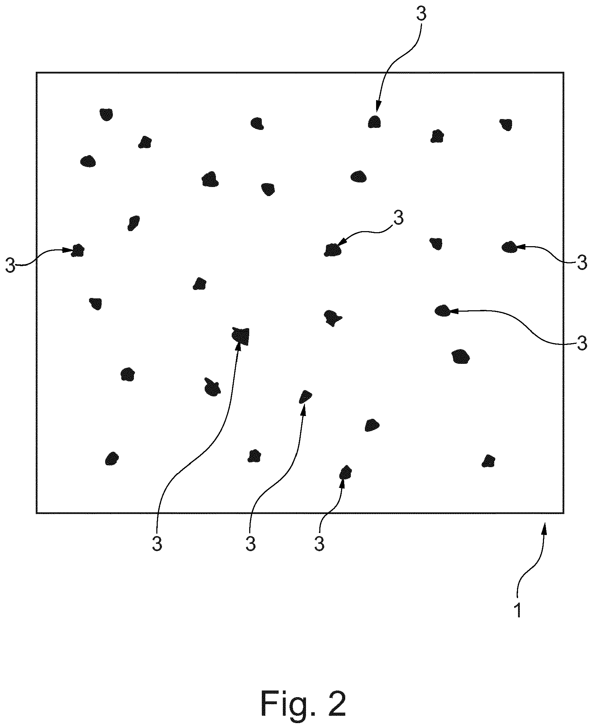

FIG. 2 shows the object 1 of FIG. 1 again. However, the object 1 now includes additional marks 3 which are similar to the already existing (original) marks 2 and also seem randomly distributed. According to this aspect of the invention, the security feature is hidden by using an appearance for the marks 3 which is similar to the appearance of the original marks 2. Also the marks 3 themselves can have approximately the same shape, size, color or other characteristic to make the marks look like the marks 2. Advantageously, only a few marks are added, so that the general appearance of the original marks remains substantially unchanged. If the number of added marks 3 is w and the number of existing marks is v, an advantageous ratio is w < v (w is lower than v). The ratio v/w may advantageously be greater than 1, and in some embodiments greater than 10 or greater than 20. In other words, the additional marks of the security feature are adapted to the existing marks of the object in terms of size, shape, distribution, number and/or color etc. This improves the covertness of the security feature. The security feature (i.e. in this embodiment, the additional marks of the security feature) blends into the area, region and/or portion of the object in which the additional marks are created.

The location and/or shape and/or color and/or distribution of the additional marks represent(s) predetermined machine readable information (data). They are adapted to the characteristic (pre-existing marks due to manufacturing) of the object (or an element of an object) to which the security feature is applied. The characteristic of the object (or element of the object) can advantageously be due to a manufacturing process of the object. The characteristic can be a side-effect or unavoidable consequence of the manufacturing process. The characteristic can also be a desired effect or desired physical appearance of the object. The security feature is, at least not immediately visible when the object is inspected by the naked eye.

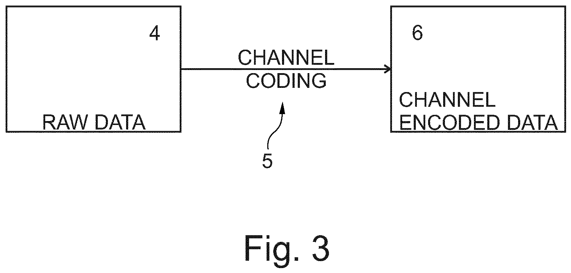

FIG. 3 shows a simplified diagram of an embodiment according to aspects of the invention. In this embodiment, the raw data 4 is processed according to a channel coding algorithm in order to generate the channel encoded data 6. The channel encoded data 6 has the physical appearance necessary for hiding the channel encoded data in the object 1. Advantageous embodiments of the channel coding are described below.

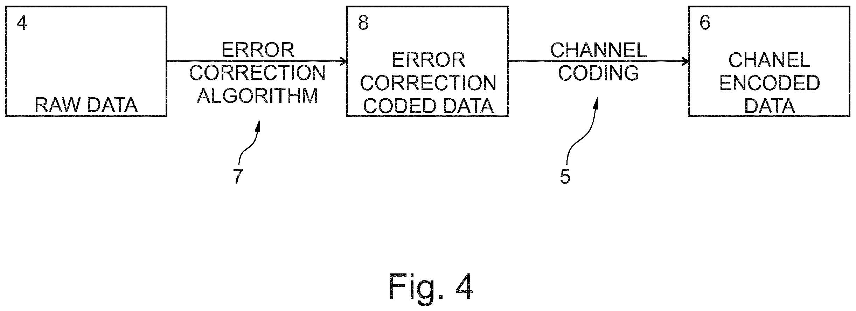

FIG. 4 shows a simplified diagram of an embodiment of the invention according to aspects of the invention. In this embodiment, the raw data 4 is first processed according to an error correction algorithm (for example Reed-Solomon error correction) in order to generate the error correction coded data 8. This error correction coded data 8 is then processed according to the channel coding algorithm 5 in order to generate the channel encoded data 6. The additional error correction process can advantageously be used to incorporate redundant data into the raw data. This redundant or additional data can then serve to detect and/or to correct errors during a read-out process of the channel encoded data 6. The Reed-Solomon algorithm is well-known in the art and the amount of redundant data can be adapted to the specific requirements of the application.

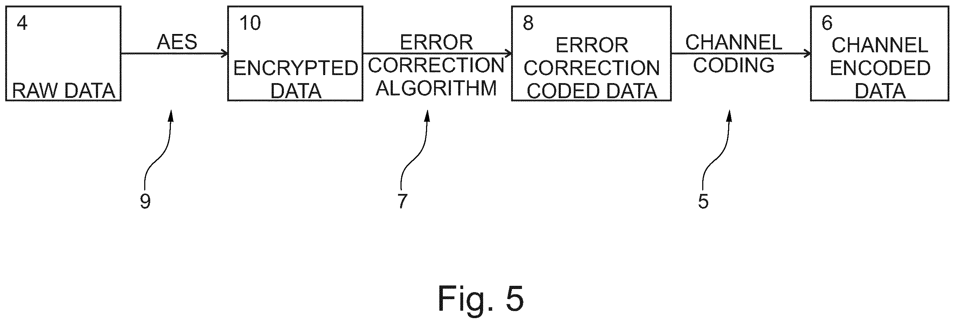

FIG. 5 shows a simplified diagram of an embodiment according to aspects of the invention. The raw data 4 is first processed according to an encryption algorithm (as for example AES - advanced encryption standard) in which for example a key is used. The encrypted data 10 is then processed according to the error correction algorithm 7 (as previously described). The error correction coded data 8 is then processed with a channel coding algorithm 5 in order to obtain the channel encoded data 6 (as previously described).

In other words, the predetermined information or data that is represented by the security feature can be encrypted raw data. Any pre-determined information/data (typically digital data) may then be encrypted before it is channel coded. This increases the security of the feature. Furthermore, an error correction algorithm, as the Reed-Solomon algorithm can be applied to the data in order to make it possible to detect and/or correct detection/read-out errors.

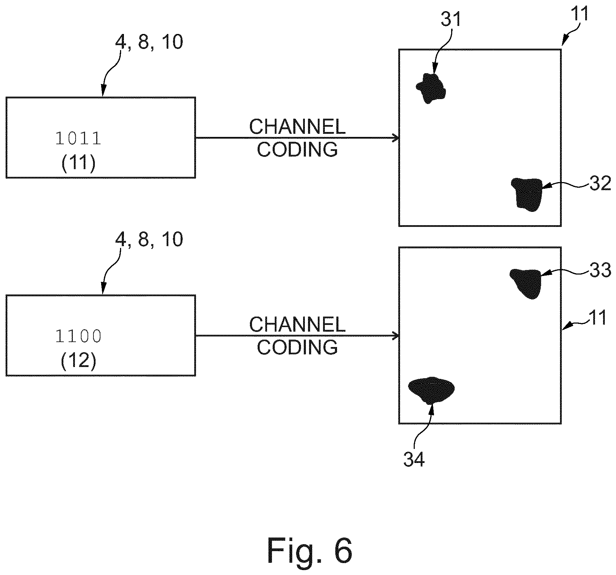

FIG. 6 shows a simplified diagram illustrating the channel coding process 5. Just as a simplified example, there are binary numbers 1011 (11) representing is either the raw data 4, the error correction coded data 8 or the encrypted data 10. This multi-bit word 1011 can only be a part of a long data stream including a plurality of multi-bit words. For each multi-bit word of the data stream (in this example 4 bit) a specific symbol is generated and assigned to this multi-bit word. In the present example, the bit word 1011 as the specific symbol 11. The marks 31, 32 have a specific size, shape and location within a certain area, field, region and/or portion of the object 1. The multi-bit word 1100 (12) may then be another multi-bit word of the data stream to be processed. As previously described, this data stream, can be the raw data 4, the error correction coded data 8 or the encrypted data 10. The multi-bit word 1100 also has a specific predetermined symbol 11 with marks 33 and 34. All marks 31, 32, 33 and 34 are substantially adapted to have the physical appearance of marks already present on an object 1. Furthermore, the distribution of the marks 31, 32 and 33, 34 within a specific area as well as the number of the marks 31, 32, 33 and 34 within the specific area can also be adapted to the given characteristics of the object 1. In other words, also the blocks (area of symbols) can be adapted to hide the additional marks. Each multi-bit word (in case of a 4 bit word there are 2⁴=16 different multi-bit words), one specific symbol can be generated which is advantageously different from all other symbols. In order to increase the reliability and in order to reduce the error rate during detection, the number of the marks within each symbol 11 can be increased as long as the covertness of the security feature is not impaired.

The process of assigning additional marks/groups of additional marks/symbols to the predetermined data/information such that the physical appearance of the security feature is similar to a specific physical characteristic of the object is the process of channel coding. The marks/groups of marks/symbols are then properly arranged on the object while taking care that the physical appearance of the pre-existing marks (the existing characteristic) is not affected.

The original marks can be due to the manufacturing process of the object. The original marks are randomly distributed. The original characteristic of the object is imitated by adding marks/groups of marks/symbols without substantially changing the original physical appearance of the object. The original marks may be defects and/or impurities and/or particles and/or holes and/or fibers and/or pigments, etc. The security feature may then comprise additional marks having a similar appearance as the originally existing marks. The additional marks can be similar to the original marks in terms of size, shape, number, distribution, color etc. Each of these aspects of the invention further improves the covertness of the security feature. All the pre-existing characteristics or pre-existing marks can be substantially invisible to the naked eye. This means that the marks are not obvious when inspected by the naked eye without using a magnifying glass, a microscope or other means of inspection. The additional marks may then have the same appearance and also be substantially invisible to the naked eye. The location (relative and/or absolute), size and/or shape and/or color of the individual additional marks etc. is used to store the pre-determined machine readable information in the object.

A group of marks or a symbol can be more easily identified than a single mark. A group or symbol can advantageously be based on redundant information. The more redundant the information of a symbol or group of marks, the lower the error rate during read out of the information.

All detectable parameters and properties of the marks, be it individual, be it with respect to each other (relative location/position) or with respect to the object can advantageously be used to represent information (data).

Each of the groups of marks/symbols has a predetermined number of marks. The number of marks per group may for example be n (n being a positive integer). In advantageous embodiments n = 1, 2, 3, 4, 5, 6 or more. In the present embodiment, n is equal to 2 (n=2).

The number of bits of the multi-bit word can be j (n being a positive integer). In this embodiment, j is equal to 4 (j=4). However, it is also possible to chose j = 2, 3, 4, 5, 6, 7, 8, 9, 10 or more.

Although the number of additional marks per symbol can be equal to the number of bits of the multi-bit word, in the present embodiment, the number of additional marks per group is different from the number of bits of the multi-bit word that is represented by the group of additional marks. In other words, an additional mark does not necessarily represent a single bit.

Two or more different symbols can be used for the multi-bit word. This is advantageous as the redundancy within the security feature is then further increased while the random appearance is also improved. One of the multiple possible symbols is then randomly selected and arranged on the object.

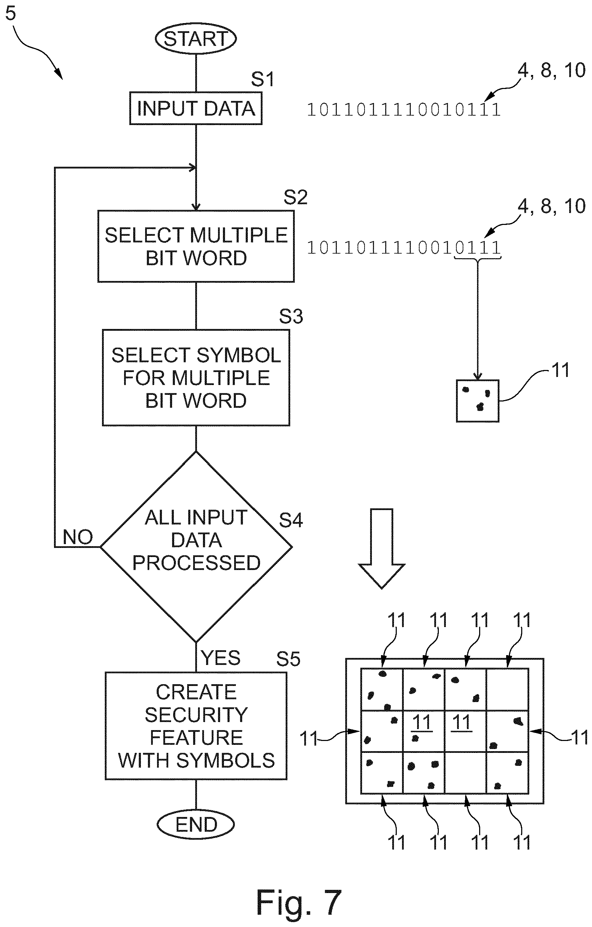

FIG. 7 shows a simplified flow chart illustrating the process of generating the security feature during the channel coding process. In step S1 input data is passed to the channel coding process. Just as an example, a data stream 4, 8, 10 is indicated on the right hand side of step S1. In step S2, a multi-bit word (in this example 4 bit) is selected from the data stream. In step S3, a specific symbol is selected for the specific multi-bit word. In step S3 a predefined set of symbols may be used which is generated in a symbol generator. Different sets of symbols may be used within a single object (depended on the number of security features present on the object) or for different objects.

It is also possible to use the security feature according to aspects of the invention hierarchically. This means that a security feature may have different levels so that a first level is detectable by rather simple detectors. Some marks provided within the security feature may then not be detectable by the simple detectors but only by more sophisticated detectors. Accordingly, it is possible to incorporate different levels of security within a single security feature.

In order to define an appropriate channel coding (definition of the properties of the security feature), an object 1 or a component, element, area, region and/or portion of the object may then be analyzed for a specific characteristic, as for example a physical appearance of the object and/or the component, element, region, area, and/or portion of the object. The security element can then be applied to the object and/or the component, element, region, area, and/or portion of the object, either after manufacturing the object and/or the component, element, region, area, and/or portion of the object, while manufacturing the object and/or the component, element, region, area, and/or portion of the object, or after manufacturing the object and/or the component, element, region, area, and/or portion of the object

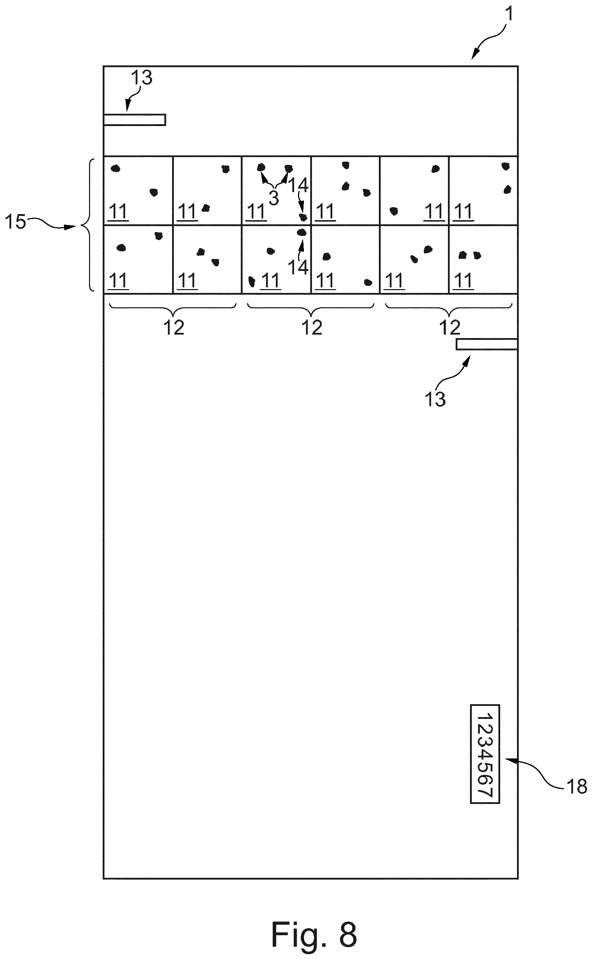

FIG. 8 shows a simplified diagram of an embodiment of the invention. In the present embodiment, the object 1 is a valuable document, and more specifically a banknote. In other embodiments, the object 1 to which the security feature is applied may be a valuable object, a security object, a consumer product, a security document, a certificate (for example of birth, residence, marital status, name etc.), a certified copy of a document, a card, as for example a smart card, an access card, a credit card, a bonus card, an identity card, a passport, etc.

The security feature is incorporated into the metalized stripe or patch 15 (for example a layer, sheet or foil having a thin metal layer) of the valuable document (banknote). In other words the element of the object 1 to which the security feature is applied, can be the metalized stripe or patch.

In this embodiment, the security feature is a laser written structure. The added marks 3 of the security feature are local, micrometer sized demetalizations. The metal (or other) layer of the metalized stripes of banknotes (and other documents) has defects in the form of little holes which seem randomly distributed over the stripe. The security feature is spread over the whole stripe by adding the additional marks 3 in form of holes. These holes are generated by a laser (not shown) and look like all other demetalized dots which are due to the manufacturing process. The security feature is written using a high resolution laser lithographic system allowing direct demetalization of thin metal layers.

The demetalization has very small dot sizes (only a few micrometers, as for example 1, 2, 3, 4 up to 10, 16 or 20 µm) and a very high positional accuracy of for example 0,1, 0,2 up to 0,5 µm. The original marks (dots/holes) which are also present in the stripe are not shown.

The security feature only comprises a few additional micrometer sized dots that appear randomly distributed. If these dots are sufficiently small, they cannot be observed with the naked eye, neither in reflection nor in transmission. Even with a magnifying glass or microscope, the dots cannot be detected in reflection mode by the naked eye. Only in transmission mode and by use of a microscope, the dots can be identified.

The number of dots (additional marks) per area of the stripe can then be very low. In this embodiment, the total number of dots on the entire stripe or within a data field may be between 100 and 200 (FIG. 8 is only a simplified drawing). This improves the covertness of the feature.

The positions of the marks within each symbol are randomly distributed (pseudo-randomly). The marks (or dots) do then appear like a random pattern similar to the original defects in the metalized foil stripes of the valuable documents such as banknotes.

An individual composition or set of symbols can be used for each object (banknote).

The added marks are arranged in groups (symbols) 11 as previously described and the groups/symbols 11 are arranged on the metalized stripe of the valuable document. A specific area is determined in which the (all) marks of a group/symbol are found. This area is referred to as a block. All blocks of the security feature can then be arranged side-by-side (non-overlapping). This simplifies the detection. An overlapping arrangement of the blocks is also possible. A block may be a rectangular area. However, in other embodiment, different shapes of a block can be used.

A certain number of blocks can be combined. This combination of blocks is referred to as a data field 12. A single data field 12 may then carry the entire stored information/data. The data field may be repeated along the stripe (here three times). This further increases the redundancy and therefore the robustness of the security feature. If one of the data fields is destroyed, another data field can be used to read the data/information stored in the security feature. Each data field may use different symbols or sets of symbols for the same data. This provides that the stripe 15 does not show any regularity (repetition of patterns).

For example, a Reed-Solomon error code RS(m,k) transforms k symbols of data into j bit by adding 2*t parity symbols of j bit. The result is m symbols of j bit. In the decoding step t=(m-k)/2 incorrect symbols can be detected and corrected.

Generally, the number of bits to be stored in the feature depends on the used error correction algorithm and the number of errors which are to be detected and/or corrected.

According to an embodiment of the invention, individual user data may be incorporated into the banknote. If for example, the user storage capacity of the security feature is x bit (*k* multi-bit-words of *j* Bit, i.e. *x*=*k*j*), it is possible to incorporate for example a serial number that can be represented by y bit, while y is equal to or lower than x. The data may be a serial number of the valuable document. In another embodiment, only a part of the user data may be used (for example for a serial number) and the remaining z=x-y bit may be used for other information.

An example including (Reed-Solomon) error correction may have the following data structure:
- number of bits per multi-bit-word (=symbol): j = 4
- User information: x= 12 * 4 bit = 48 user bit (k = 12)
- Error correction (Reed-Solomon): 48 user bit + 48 bit (parity) = 96 error coded bit (t=6 wrong 4-bit-symbols can be corrected)

The data stored in the security feature on the stripe can be individual user data. If for example, the storage capacity of the security feature is x bit of data (*k* multi-bit-words of *j* Bit), it is possible to incorporate for example a serial number that can be represented by y bit, and y <= x. In this embodiment, the data is the serial number of the valuable document (banknote). Only a part of the x bits is used for the serial number and the remaining z= x-y bits are used for other information.

The individual user data to be stored in the security feature, can be the serial number 18, but also a batch number, a denomination, a production country, a production year or other information.

The additional information/data stored in the security feature can be statistical data or other features of the valuable document. This may then lead to the possibility of correlating security features or data of the valuable document. Using correlation can improve the level of security against copying and counterfeiting.

The additional data/information can indicate production variations of the object 1. These production variations may comprise properties like optical density, alignment, geometrical distortions, edge sharpness, holes etc.

The data/information in the security feature can be correlated with another security feature of the object. This other security feature may be a UV (ultraviolet), magnetic or infrared (IR) print.

Two symbols 11 of one set of symbols (for example all symbols of one data field in this example) never share any marks. This means that the additional marks of two symbols are never at the same location and/or the additional marks of different symbols can also vary in shape and/or size.

The number of marks per symbol can be increased as long as the physical appearance of the object is not affected (at least not above a level that renders ten additional marks visible to the naked eye). This reduces the error rate as a symbol may still correctly be detected and read-out, even if not all marks are readable. The detection becomes more robust, the more marks are used per symbol.

The positions of the marks within the symbols are randomly chosen. The security feature of each banknote is individually calculated. This provides a unique individual structure for each object 1 (banknote).

According to an aspect of the invention, an additional marking 13, 14 or structure may be provided on the object 1 carrying the security feature. The additional marking 13, 14 serves to align the object with a detector in order to read-out the security feature.

In this embodiment of the invention, the object 1 comprises a first additional marking 13 for rough alignment and a second additional marking 14 for fine alignment. The second marking 14 (for fine alignment) is made by the same manufacturing steps and/or devices used for the additional marks 3 of the security feature.

In other words, the laser used for the additional marks may also be used for the second marking 14. This provides that the same precision is achieved for the additional marks 14.

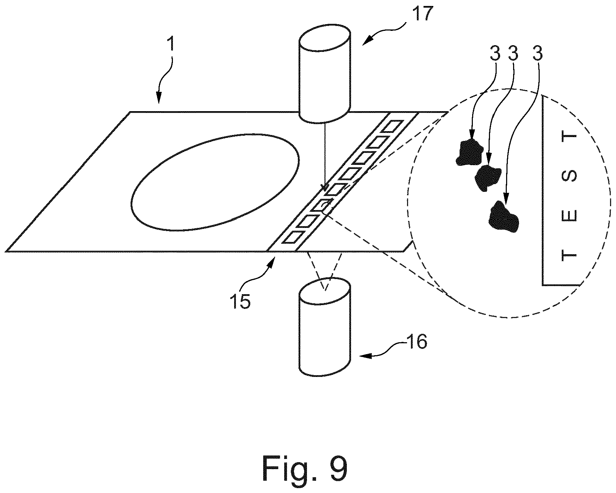

FIG. 9 shows a simplified drawing illustrating the detection of the security feature. The security feature is read-out with a dedicated sensor or detection apparatus.

With respect to the above described embodiment using the stripe or patch and demetalized dots, the security feature can be read-out using an optical arrangement including for example a light source 16 and a microscope 17 (including a camera). A light source 16 can be located behind the valuable document (backside) and the microscope 17 (including a camera) is located on the opposite side of the valuable document (front side). The additional marks 3 of the security feature may be a very little bit larger (in maximum diameter or cross-sectional area) than the original marks/dots, such that the demetalized dots appear a little bit brighter than the background.

A picture is taken (by the camera inside 17) of the area were the security feature is located. The picture is then processed (image processing). Since the locations of added marks are known, the pattern recognition algorithm can directly search for the specific additional marks. If the marks are detected, the authenticity of the object is confirmed. Due to redundancy, the authenticity can also be confirmed, if only a few and not all additional marks are detected.

The robustness of the coding allows very stable read-out of the security feature at high transport speeds of the valuable document, in particular of banknotes. The same basic structure of the security element may be used on different valuable documents.

Each symbol can be located within a specific area, region or portion of the object.

According to still another aspect of the invention the security feature is organized hierarchically. This means that a security feature may have different levels so that a first level is detectable by rather simple detectors. Some marks provided within the security feature may then not be detectable by the simple detectors but only by more sophisticated detectors. Accordingly, it is possible to incorporate different levels of security within a single security feature.

The different hierarchical levels within the security feature can be provided by using different shapes, sizes, colors, numbers, distributions and/or patterns for the marks of different levels of the security feature. For example, a smaller size of the marks may render it impossible to detect those marks with a rather simple detector.

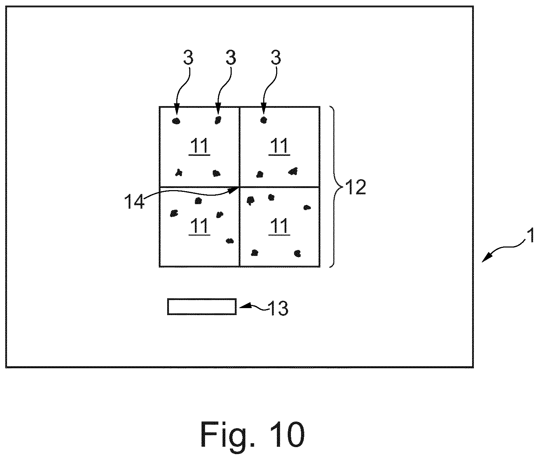

FIG. 10 shows another embodiment of the invention. In this embodiment, additional marks are added to a sheet or layer or surface of an object. There are no original marks. The additional marks are adapted to a characteristic of the object. The additional marks may be adapted in anyone of following characteristics in order not to be visible to the naked eye: distribution and/or size and/or the shape and/or the color. The pre-determined machine readable information can then be represented by the relative locations and/or sizes and/or shapes and/or colors of the additional marks. The error coding and/or channel coding as well as the encryption can then be performed as described with respect to the other embodiments of the invention. The additional marks can be arranged in blocks (predefined limited area). These blocks can be overlapping or non-overlapping. The blocks can have any predetermined shape as for example rectangular or circular etc.

In the present embodiment, this characteristic is the appearance of the surface of an object 1, as for example a sheet of paper or plastic.

The object 1 includes additional marks 3 seeming randomly distributed. The security feature is hidden by the random appearance of the marks. The additional marks 3 can also be adapted in size and number per area (distribution) in order to be hidden to the visible eye. Advantageously, only a few marks are added, so that the general appearance of the surface of the object 1 remains substantially unchanged. The additional marks of the security feature blend into the area, region and/or portion of the object in which the additional marks are created.

The location and/or shape and/or color and/or distribution of the additional marks represent(s) predetermined machine readable information (data). They are adapted to the characteristic of the object (or an element of an object) to which the security feature is applied. The characteristic (color, etc) of the object 1 (or element of the object) can advantageously be due to a manufacturing process of the object 1. The characteristic can be a side-effect or unavoidable consequence of the manufacturing process. The characteristic can also be a desired effect or desired physical appearance of the object. The security feature is, at least not immediately visible when the object is inspected by the naked eye.

Similar to the other embodiments of the invention, raw data 4 can be processed according to a channel coding algorithm in order to generate the channel encoded data 6. The channel encoded data 6 has the physical appearance necessary for hiding the channel encoded data in the object 1.

In this embodiment, the raw data 4 can first be processed according to an error correction algorithm (for example Reed-Solomon error correction) in order to generate the error correction coded data 8. This error correction coded data 8 can then be processed according to the channel coding algorithm 5 in order to generate the channel encoded data 6. The additional error correction process can advantageously be used to incorporate additional data into the raw data. This redundant or additional data can then serve to detect and/or to correct errors during a read-out process (detection process) of the channel encoded data 6. Error correction algorithms, as for example the Reed-Solomon algorithm, are well-known in the art and the amount of redundant data can be adapted to the specific requirements of the application.

The raw data 4 can also be processed according to an encryption algorithm (as for example AES - advanced encryption standard) in which for example an encryption key is used before the error correction algorithm is applied. The encrypted data 10 can then be processed according to the error correction algorithm 7 (as previously described). The error correction coded data 8 is then processed using a channel coding algorithm 5 in order to obtain the channel encoded data 6 (as previously described).

In other words, the predetermined information or data that is represented by the security feature can be encrypted raw data. Any pre-determined information/data (typically digital data) may then be encrypted before it is channel coded. This increases the security of the feature. Furthermore, an error correction algorithm, as for example the Reed-Solomon algorithm, can be applied to the data in order to make it possible to detect and/or correct detection/read-out errors.

An advantageous channel coding process 5 is shown in FIG. 6, which can also be applied to the embodiment of FIG. 10. The process of assigning marks/groups of marks/symbols to the predetermined data/information such that the physical appearance of the security feature is similar to a specific physical characteristic of the object is the process of channel coding. The marks/groups of marks/symbols are then properly arranged on the object while taking care that the physical appearance of the existing characteristic of the surface of the object is not affected to an extent that the additional marks become visible to the marked eye. The pre-existing characteristic can be substantially invisible to the naked eye.

A group of additional marks or a symbol can be more easily detected than a single mark. A group or symbol can advantageously be based on redundant information. The more redundant the information of a symbol or group of marks, the lower the error rate during read out of the information.

All detectable parameters and properties of the additional (added) marks, be it individual, be it with respect to each other or with respect to the object can advantageously be used to represent information (data).

Each of the groups of marks/symbols has a predetermined number of marks. The number of marks per group may for example be n (n being a positive integer). In advantageous embodiments n = 1, 2, 3, 4, 5, 6 or more. In the present embodiment n=2.

The number of marks per symbol can be equal to the number of bits of the multi-bit word or the number of marks per group can be different from the number of bits of the multi-bit word that is represented by the group of marks. In other words, a mark does not necessarily represent a single bit.

Two or more different symbols can be used for the same multi-bit word. This is advantageous as the redundancy within the security feature is then further increased while the random appearance is improved. One of the multiple possible symbols is then randomly selected and arranged on the object.

This channel coding process shown in FIG. 7 can also be applicable to the embodiment shown in FIG. 10.

It is also possible to use the security feature according to aspects of the invention hierarchically. This means that a security feature may have different levels so that a first level is detectable by rather simple detectors. Some marks provided within the security feature may then not be detectable by the simple detectors but only by more sophisticated detectors. Accordingly, it is possible to incorporate different levels of security within a single security feature.

In order to define an appropriate channel coding (definition of the properties of the security feature), an object 1 or a component, element, area, region and/or portion of the object may then be analyzed for a specific characteristic, as for example a physical appearance of the object and/or the component, element, region, area, and/or portion of the object. The security element can then be applied to the object and/or the component, element, region, area, and/or portion of the object, either after manufacturing the object and/or the component, element, region, area, and/or portion of the object, while manufacturing the object and/or the component, element, region, area, and/or portion of the object.

The object 1 to which the security feature is applied may be a valuable object, a security object, a consumer product, a security document, a certificate (for example of birth, residence, marital status, name etc.), a certified copy of a document, a card, as for example a smart card, an access card, a credit card, a bonus card, an identity card, a passport, etc.

The security feature can be applied to the surface in form of dots or holes or fibers. These dots or holes or fibers then form the additional marks. In the present embodiment, the marks are printed dots. The added marks 3 of the security feature are micrometer sized dots. The added marks seem randomly distributed over the surface of the object. The security feature can be spread over the whole surface of the object by adding the additional marks 3 in form of dots.

The dot size (diameter) of the additional marks 3 can be a few micrometers, as for example 1, 2, 3, 4 up to 10, 16 or 20 µm, The security feature only comprises a few additional micrometer size dots that appear randomly distributed. If these dots are sufficiently small, they cannot be observed with the naked eye, neither in reflection nor in transmission. Even with a magnifying glass or microscope, the dots may not be detected.

The number of dots per area of the surface of the object can then be very low. The positions of the marks within each symbol (block) are pseudo-randomly distributed, which means they are predetermined but seem randomly distributed. The marks (or dots) do then appear like a random pattern.

An individual composition or set of symbols can be used for each object (banknote).

The added marks are arranged in groups (symbols) 11 as previously described and the groups/symbols 11 are arranged on the surface of the object 1. A specific area is determined in which the (all) marks of a group/symbol are found, which is referred to as a block. All blocks of the security feature can then be arranged side-by-side (non-overlapping). An overlapping arrangement of the blocks is also possible. A block may be a rectangular area. However, in other embodiment, different shapes of a block can be used. The blocks can be combined to a data field 12 as previously described. A single data field 12 may then carry the entire stored information/data. The data field may be repeated over the surface of the object. This further increases the redundancy and therefore the robustness of the security feature. If one of the data fields 12 is destroyed, another data field can be used to read the data/information stored in the security feature. Each data field may use different symbols or sets of symbols for the same data. This provides that the surface of the object 1 does not show any regularity (repetition of patterns).

The object 1 comprises a first additional marking 13 for rough alignment and a second additional marking 14 for fine alignment. The second marking 14 (for fine alignment) is advantageously made by the same manufacturing steps and/or devices (i.e. for example the same printer etc) used for the additional marks 3 of the security feature.

In other words, the laser may also be used for the second marking 14. This provides that the same precision is achieved for the additional marks 14.

Error correction algorithms and/or encryption algorithms can be applied as previously described with respect to other embodiments of the invention, The additional information/data stored in the security feature can be statistical data or other features of the object 1. This may then lead to the possibility of correlating security features or data of the object 1. Using correlation of data as previously described can improve the level of security against copying and counterfeiting.

All the other aspects and characteristics of the invention can also be applied to this embodiment of the invention.

## Claims

1. A method of manufacturing an object comprising a security feature storing predetermined machine readable data and being adapted to an inherent characteristic of the object (1) to which the security feature is applied, **wherein**
- the characteristic of the object (1) is a plurality of original marks (2) wherein
- the original marks (2) are a consequence of the manufacturing process of the object (1),
- wherein the security feature further comprises additional marks (3),
- the additional marks represent the predetermined machine readable
data and have a similar appearance as the original marks (2),
**characterized in that**
said additional marks (3) are applied to the object (1) after the manufacturing process of the object has created the original marks (2).

2. The method according to claim 1, wherein the additional marks (3) are similar to the original marks (2) in terms of size, shape, and/or color.

3. The method according to claim 1 or 2, wherein the additional marks (3) and the original marks (2) are substantially invisible to the naked eye.

4. The method according to anyone of the previous claims, wherein the pre-determined machine readable data is represented by the relative and/or absolute locations, sizes, shapes and/or colors of the additional marks (3).

5. The method according to anyone of the previous claims, wherein the additional marks (3) are arranged in groups (11).

6. The method according to claim 5, wherein each group (11) of additional marks (3) represents a multi-bit word of the predetermined machine readable data.

7. The method according to anyone of claims 5 or 6, wherein two or more different groups (11) represent the same multi-bit word.

8. The method according to anyone of the previous claims, wherein the predetermined machine readable data is encrypted.

9. The method according to anyone of the previous claims, wherein the predetermined machine readable data is error coded.

10. The method according to anyone of the previous claims, wherein the additional marks (3) are written by a laser or printed.

11. The method according to anyone of the previous claims, wherein the additional marks (3) of the security feature are local, micrometer sized demetalizations and/or the additional marks (3) are located in a metalized stripe or patch of a valuable document.

12. The method according to anyone of the previous claims, wherein the predetermined machine readable data comprises individual user data.

13. The method according to anyone of the previous claims, wherein the predetermined machine readable data is correlated with data relating to the object (1).

14. The method according to anyone of the previous claims, further comprising an additional marking (14) for fine alignment.

15. The method (1) according to anyone of the previous claims, wherein the object is a banknote.

## Patentansprüche

1. Verfahren zur Herstellung eines Gegenstands, der ein Sicherheitsmerkmal umfasst, in dem vorbestimmte maschinenlesbare Daten gespeichert sind und das an ein inhärentes Kennzeichen des Gegenstands (1) angepasst ist, auf den das Sicherheitsmerkmal aufgebracht wird, wobei
- das Kennzeichen des Gegenstands (1) mehrere ursprüngliche Zeichen (2) sind, wobei
- die ursprünglichen Zeichen (2) eine Folge des Herstellungsprozesses des Gegenstands (1) sind,
- wobei das Sicherheitsmerkmal ferner zusätzliche Zeichen (3) umfasst,
- die zusätzlichen Zeichen die vorbestimmten maschinenlesbaren Daten darstellen und ein ähnliches Erscheinungsbild wie die ursprünglichen Zeichen (2) aufweisen,
**dadurch gekennzeichnet, dass**
die zusätzlichen Zeichen (3) auf den Gegenstand (1) aufgebracht werden, nachdem die ursprünglichen Zeichen (2) durch den Herstellungsprozess des Gegenstands erzeugt worden sind.

2. Verfahren nach Anspruch 1, bei dem die zusätzlichen Zeichen (3) in Bezug auf Größe, Form und/oder Farbe den ursprünglichen Zeichen (2) ähnlich sind.

3. Verfahren nach Anspruch 1 oder 2, bei dem die zusätzlichen Zeichen (3) und die ursprünglichen Zeichen (2) für das bloße Auge im Wesentlichen unsichtbar sind.

4. Verfahren nach einem der vorhergehenden Ansprüche, bei dem die vorbestimmten maschinenlesbaren Daten durch die relativen und/oder absoluten Positionen, Größen, Formen und/oder Farben der zusätzlichen Zeichen (3) dargestellt werden.

5. Verfahren nach einem der vorhergehenden Ansprüche, bei dem die zusätzlichen Zeichen (3) in Gruppen (11) angeordnet werden.

6. Verfahren nach Anspruch 5, bei dem jede Gruppe (11) zusätzlicher Zeichen (3) ein Mehrbitwort der vorbestimmten maschinenlesbaren Daten darstellt.

7. Verfahren nach einem der Ansprüche 5 oder 6, bei dem zwei oder mehrere verschiedene Gruppen (11) das gleiche Mehrbitwort darstellen.

8. Verfahren nach einem der vorhergehenden Ansprüche, bei dem die vorbestimmten maschinenlesbaren Daten verschlüsselt werden.

9. Verfahren nach einem der vorhergehenden Ansprüche, bei dem die vorbestimmten maschinenlesbaren Daten fehlercodiert werden.

10. Verfahren nach einem der vorhergehenden Ansprüche, bei dem die zusätzlichen Zeichen (3) mit einem Laser geschrieben oder gedruckt werden.

11. Verfahren nach einem der vorhergehenden Ansprüche, bei dem die zusätzlichen Zeichen (3) des Sicherheitsmerkmals lokale, mikrometergroße Demetallisierungen sind und/oder die zusätzlichen Zeichen (3) sich in einem metallisierten Streifen oder Abschnitt eines Wertdokuments befinden.

12. Verfahren nach einem der vorhergehenden Ansprüche, bei dem die vorbestimmten maschinenlesbaren Daten individuelle Benutzerdaten umfassen.

13. Verfahren nach einem der vorhergehenden Ansprüche, bei dem die vorbestimmten maschinenlesbaren Daten mit den Gegenstand (1) betreffenden Daten korreliert werden.

14. Verfahren nach einem der vorhergehenden Ansprüche, ferner mit einer zusätzlichen Markierung (14) zur Feinausrichtung.

15. Verfahren (1) nach einem der vorhergehenden Ansprüche, bei dem der Gegenstand eine Banknote ist.

## Revendications

1. Procédé de fabrication d'un objet comprenant un élément de sécurité mémorisant des données lisibles par machine prédéterminées et adapté à une caractéristique inhérente de l'objet (1) sur lequel l'élément de sécurité est appliqué,
- la caractéristique de l'objet (1) étant une pluralité de marques initiales (2),
- les marques initiales (2) étant une conséquence de la procédure de fabrication de l'objet (1),
- l'élément de sécurité comprenant en outre des marques supplémentaires (3),
- les marques supplémentaires représentant les données lisibles par machine prédéterminées et présentant une apparence similaire à celle des marques initiales (2),
**caractérisé en ce que**
les marques supplémentaires (3) sont appliquées sur l'objet (1) après la création des marques initiales (2) par le procédé de fabrication de l'objet.

2. Procédé selon la revendication 1, dans lequel les marques supplémentaires (3) sont similaires aux marques initiales (2) quant à la taille, la forme et/ou la couleur.

3. Procédé selon la revendication 1 ou 2, dans lequel les marques supplémentaires (3) et les marques initiales (2) sont sensiblement invisibles à l'oeil nu.

4. Procédé selon l'une des revendications précédentes, dans lequel les données lisibles par machine prédéterminées sont représentées par les positions, les tailles, les formes et/ou les couleurs relatives et/ou absolues des marques supplémentaires (3).

5. Procédé selon l'une des revendications précédentes, dans lequel les marques supplémentaires (3) sont agencées par groupes (11).

6. Procédé selon la revendication 5, dans lequel chaque groupe (11) de marques supplémentaires (3) représente un mot à plusieurs bits des données lisibles par machine prédéterminées.

7. Procédé selon l'une des revendications 5 ou 6, dans lequel deux groupes (11) différents ou plus représentent le même mot à plusieurs bits.

8. Procédé selon l'une des revendications précédentes, dans lequel les données lisibles par machine prédéterminées sont chiffrées.

9. Procédé selon l'une des revendications précédentes, dans lequel les données lisibles par machine prédéterminées sont codées d'erreurs.

10. Procédé selon l'une des revendications précédentes, dans lequel les marques supplémentaires (3) sont écrites au moyen d'un laser ou sont imprimées.

11. Procédé selon l'une des revendications précédentes, dans lequel les marques supplémentaires (3) de l'élément de sécurité sont des démétallisations locales de taille micrométrique, et/ou les marques supplémentaires (3) se trouvent dans une bande ou une tranche métallisée d'un document de valeur.

12. Procédé selon l'une des revendications précédentes, dans lequel les données lisibles par machine prédéterminées comprennent des données d'utilisateur individuelles.

13. Procédé selon l'une des revendications précédentes, dans lequel les données lisibles par machine prédéterminées sont mises en corrélation avec des données concernant l'objet (1).

14. Procédé selon l'une des revendications précédentes, comprenant en outre un marquage supplémentaire (14) pour un alignement précis.

15. Procédé (1) selon l'une des revendications précédentes, dans lequel l'objet est un billet de banque.
